# EUROPÄISCHE PATENTSCHRIFT

(11) **EP 2 734 410 B1**
(45) Veröffentlichungstag und Bekanntmachung des Hinweises auf die Patenterteilung: **11.04.2018**
(21) Anmeldenummer: 12738054.1
(22) Anmeldetag: 05.07.2012
(51) Int. Cl.: B60N 2/225, B60N 2/44, B60N 2/68, B60N 2/16, B60N 2/18

(54) **BESCHLAG FÜR EINE VERSTELLVORRICHTUNG EINES KRAFTFAHRZEUGSITZES SOWIE VERFAHREN ZU DESSEN HERSTELLUNG**
FITTING FOR AN ADJUSTING DEVICE OF AN AUTOMOTIVE VEHICLE SEAT AND PROCESS FOR PRODUCING THE SAME
FERRURE POUR DISPOSITIF D'AJUSTEMENT D'UN SIÈGE DE VÉHICULE AUTOMOBILE ET PROCÉDÉ POUR SA FABRICATION

(30) Priorität: 20.07.2011 DE 102011051988
(43) Veröffentlichungstag der Anmeldung: 28.05.2014
(73) Patentinhaber: Adient Luxembourg Holding S.à r.l., 1855 Luxembourg (LU)
(72) Erfinder: VATMAKHTER, Eduard, 40724 Hilden (DE)
(74) Vertreter: Loock, Jan Pieter
(86) Internationale Anmeldenummer: PCT/EP2012/063153
(87) Internationale Veröffentlichungsnummer: WO 2013/010810

(56) Entgegenhaltungen:
- WO-A1-92/20548
- DE-A1- 10 250 987
- DE-A1-102005 024 942
- DE-B3-102005 015 831
- GB-A- 1 237 796

## Beschreibung

Die Erfindung betrifft ein Verfahren zum spielfreien und spannungsarmen Zusammenbau eines Beschlages für eine Verstellvorrichtung eines Kraftfahrzeugsitzes, mit den Merkmalen des Oberbegriffs des Patentanspruchs 1.

Aus der GB 1 237 796 A ist ein Beschlag für eine Verstellvorrichtung eines Kraftfahrzeugsitzes bekannt, welcher ein Beschlagoberteil und ein relativ zum Beschlagoberteil verstellbares Beschlagunterteil, ein mit dem Beschlagoberteil und Beschlagunterteil in Wirkverbindung befindliches Übersetzungsgetriebe zur Verstellung des Beschlagoberteils relativ zu dem Beschlagunterteil und eine sich in Längsachsenrichtung einer Beschlagachse durch den Beschlag erstreckenden und mit dem Getriebe in Eingriff befindlichen Antriebswelle aufweist.

Die DE 10 2005 024 942 A1 und die WO 92/20548 A1 offenbaren weitere Beschläge für eine Verstellvorrichtung eines Kraftfahrzeugsitzes.

Beschläge der eingangs genannten Art ermöglichen über einen Antrieb der Antriebswelle eine durch das Getriebe festgelegte Verstellung des Beschlagoberteils gegenüber dem Beschlagunterteil, wobei über die Relativbewegung der beiden Beschlagteile zueinander hieran anlenkbare Bauteile verstellbar sind.

Der Anwendungsbereich derartiger Beschläge kann sehr vielfältig sein, wobei auch deren Einsatz bspw. im Bereich von Jalousieantrieben denkbar ist. Der Haupteinsatzbereich der gattungsgemäßen Beschläge betrifft jedoch die Verstellung von Kraftfahrzeugsitzen, wobei die Beschläge dazu genutzt werden, um die Kraftfahrzeugsitzkomponenten relativ zueinander zu verstellen. Ein typischer Einsatzbereich ist die Verwendung der Beschläge als Lehnen-, Sitzneigungsversteller oder Sitzhöhenversteller.

Insbesondere im Falle der Verwendung des Beschlages für Verstellvorrichtungen eines Kraftfahrzeugsitzes muss sichergestellt sein, dass das Beschlagoberteil auch im Crashfall lagesicher an dem Beschlagunterteil angeordnet ist, um einem Kollabieren des Sitzes vorzubeugen. Bekannte Sitzbeschläge der eingangs genannten Art weisen dabei den Nachteil auf, dass sie unter Umständen den in der Einbaulage in axialer Richtung wirkenden Belastungen nicht Stand halten. Dies führt dazu, dass es zu einer Trennung des Beschlagoberteils von dem Beschlagunterteil kommt, was mit einer sicherheitsrelevanten Verformung der Sitzstruktur einhergehen kann. Die maßgeblich die Lage von Beschlagoberteil und Beschlagunterteil zueinander sichernde Antriebswelle, welche einerseits bspw. mit einem Wellenabsatz und andererseits über einen Sicherungsring an dem Beschlag anliegt, wobei der Sicherungsring auf einem durch den Beschlag hindurchragenden Wellenende angeordnet ist, wie auch die zusätzliche Anordnung eines Halterings, sind nicht geeignet, um im Crashfall zuverlässig die Position der Beschlagteile zu sichern.

Die DE 102 50 987 A1 beschreibt ein Verfahren zum Zusammenbau eines Beschlages für eine Verstellvorrichtung eines Kraftfahrzeugsitzes. Der Beschlag weist zwei jeweils eine Innenverzahnung aufweisende Beschlagteile sowie mehrere Planetenräder auf, welche mit einer der beiden Innenverzahnungen in Eingriff stehen. Ferner ist eine Antriebswelle mit einem Ritzel vorgesehen, welches sich in Eingriff mit den Planetenrädern befindet.

Aus der DE 10 2005 015831 B3 ist ein weiteres Verfahren zum Zusammenbau eines Beschlages für eine Verstellvorrichtung eines Kraftfahrzeugsitzes bekannt. Dieser Beschlag weist zwei Beschlagteile auf, welche über ein Planetengetriebe wirkverbunden sind.

Der Erfindung liegt die Aufgabe zugrunde, ein Verfahren zur Herstellung eines Beschlages der eingangs genannten Art bereitzustellen, welcher auch unter hohen Belastungen eine zuverlässige Anordnung der Beschlagteile aneinander gewährleistet.

Die Erfindung löst die Aufgabe durch ein Verfahren mit den Merkmalen des Anspruchs 1. Vorteilhafte Weiterbildungen der Erfindung sind in den abhängigen Ansprüchen angegeben.

Kennzeichnend für den Beschlag ist, dass die Antriebswelle zur axialen Lagesicherung des Beschlagoberteils gegenüber dem Beschlagunterteil einenends mit einer Buchse vertaumelt ist, die in einer koaxial zur Beschlagachse angeordneten Öffnung von Beschlagoberteil oder Beschlagunterteil angeordnet ist, wobei die Antriebswelle auf der der Buchse gegenüberliegenden Seite mit einem Anschlag an dem Beschlag anliegt.

Die Antriebswelle sichert über den an einer Außenseite eines Beschlagteils anliegenden Anschlag und das auf der gegenüberliegenden Seite mit einer Buchse vertaumelten Wellenende die Beschlagteile in axialer Richtung aneinander. Die Buchse ist dabei in einer Öffnung auf der dem Anschlag gegenüberliegenden Seite des Beschlags angeordnet. Das in bekannter Weise mit der Buchse vertaumelte Wellenende gewährleistet eine sichere Anordnung des Beschlagoberteils am Beschlagunterteil, wobei in axialer Richtung die Beschlagteile zwischen der Buchse und dem Anschlag verspannt werden. Gleichzeitig ermöglicht die Buchse eine Verdrehung der Antriebswelle, wobei die Relativbewegung zwischen der Buchse und der dieser aufnehmenden Öffnung stattfindet.

Die Verwendung einer einenends vertaumelten Antriebswelle zur Lagesicherung der Beschlagteile aneinander gewährleistet in besonders hohem Maße eine hohe Festigkeit der Verbindung. Im Gegensatz zu alternativen Sicherungsarten über die Antriebswelle, welche bspw. im Falle der Verwendung eines Sicherungsrings eine strukturelle Schwächung des Querschnitts erfordern, weist das mit der Buchse vertaumelte Wellenende eine hohe Ausreißfestigkeit auf. Sowohl die im Crashfall auftretenden Belastung als auch die durch Missbrauch hervorgerufenen Belastungen, wobei man bspw. unterstellt, dass eine Person beim Einsteigen in das Fahrzeug auf ein an der Antriebswelle angeordnetes Handrad tritt, sind nicht dazu geeignet, um die Beschlagteile voneinander zu trennen.
Die Ausgestaltung des Übersetzungsgetriebes zur Verstellung des Beschlagoberteils gegenüber dem Beschlagunterteil durch einen Antrieb der mit dem Getriebe in Eingriff befindlichen Antriebswelle kann grundsätzlich in beliebiger Weise erfolgen. Nach einer besonders vorteilhaften Ausgestaltung ist jedoch vorgesehen, dass das Beschlagoberteil eine erste Innenverzahnung aufweist, das Beschlagunterteil eine konzentrisch zur ersten Innenverzahnung angeordnete zweite Innenverzahnung aufweist, mindestens zwei drehbar um ihre Längsachse angeordnete Planetenräder mit der ersten und zweiten Innenverzahnung in Eingriff befindlich an dem Beschlagoberteil und Beschlagunterteil angeordnet sind und die sich einenends durch den Beschlag erstreckende Antriebswelle mit einem Ritzel mit mindestens zwei Planetenrädern in Wirkverbindung befindlich ist.

Gemäß dieser Ausgestaltung erfolgt eine Verstellung des Beschlagoberteils gegenüber dem Beschlagunterteil durch ein Planetengetriebe, wobei der Antrieb der Planeten über ein mit der Antriebswelle in Wirkverbindung befindliches Sonnenrad oder aber auch direkt über ein mit den Planetenrädern in Eingriff befindliches Ritzel der Antriebswelle erfolgen kann. Die Planetenräder befinden sich in ihrer Einbaulage im gleichzeitigen Eingriff mit der ersten und zweiten Innenverzahnung, wobei diese zwar einen gleichen Kopf- und Fußkreisdurchmesser aufweisen, jedoch eine unterschiedliche Zähnezahl besitzen, um so durch einen Antrieb der Planetenräder eine Verlagerung des Beschlagoberteils relativ gegenüber dem Beschlagunterteil zu erreichen. Ein ein derartiges Getriebe aufweisender Beschlag weist eine hohe Verstellgenauigkeit bei gleichzeitiger Selbsthemmung der eingestellten Position auf und lässt sich besonders kompakt und einfach herstellen.

Das Vertaumeln des Wellenendes kann grundsätzlich in beliebiger Weise erfolgen, wobei bevorzugt durch das Vertaumeln eine verdrehfeste Verbindung zwischen dem Wellenende und der Buchse erreicht wird, so dass ein Verdrehen der Antriebswelle eine Relativbewegung der Buchsenflächen gegenüber dem Beschlagober- bzw. Beschlagunterteil zur Folge hat. Nach einer besonders vorteilhaften Ausgestaltung der Erfindung ist die Abtriebswelle einenends formschlüssig mit der Buchse vertaumelt. Diese Ausgestaltung der Erfindung gewährleistet in besonderem Maße eine hohe Verdrehsicherung der Antriebswelle gegenüber der Buchse. Besonders vorteilhafterweise weist hierzu die Buchse im Kontaktbereich mit dem Wellenende der Antriebswelle eine Profilkontur auf, an die das Wellenende nach dem Taumelprozess angepasst ist. Eine derartige Ausgestaltung bietet eine besonders hohe Verdrehsicherung sowie Lagesicherung der Beschlagteile aneinander.

Das zur Herstellung der Antriebswelle verwendete Material kann grundsätzlich frei gewählt werden, wobei üblicherweise die Auswahl unter Berücksichtigung der beim Taumelprozess stattfindenden Verformung erfolgen sollte. Nach einer besonders vorteilhaften Ausgestaltung der Erfindung ist vorgesehen, dass die Antriebswelle aus einem durch Wärmebehandlung im Temperaturbereich von 150°C bis 250°C spannungsreduzierbarem Material gebildet ist. Dieser Ausgestaltung der Erfindung liegt die Erkenntnis zugrunde, dass durch den Taumelprozess das Beschlagoberteil und Beschlagunterteil in besonderem Maße in axialer Richtung miteinander verspannt werden, was unter Umständen dazu führt, dass eine Verstellung der Antriebswelle aufgrund der Vorspannung nicht oder nur mit einem erheblichen Kraftaufwand möglich ist. Die Verwendung eines durch Wärmebehandlung im Temperaturbereich von 150°C bis 250°C spannungsreduzierbarem Material ermöglicht es, durch eine einfache Wärmebehandlung die inneren Spannungen zu reduzieren, wobei die Eigenschaften der Antriebswelle dabei nicht verändert werden. Durch die Wärmebehandlung wird erreicht, dass die Beschlagteile nach wie vor spielfrei aneinander anliegen, gleichzeitig jedoch eine Leichtgängigkeit des Getriebes vorliegt.

Nach einer besonders vorteilhaften Ausgestaltung der Erfindung ist dabei die Antriebswelle aus einer Zink-Druckgusslegierung hergestellt. Die Verwendung einer Zink-Druckgusslegierung weist den Vorteil auf, dass sich auch komplexe Geometrien der Antriebswelle wirtschaftlich kostengünstig herstellen lassen. Die Antriebswelle aus Zink-Druckguss lässt sich in engen Toleranzen fertigen, wobei eine Notwendigkeit von Nacharbeiten ausgeschlossen werden kann. Darüber hinaus bietet die Verwendung einer Zink-Druckgusslegierung zur Herstellung der Antriebswelle den Vorteil, dass die im Rahmen einer Nachbearbeitung auftretenden Wärmeeinträge, bspw. im Rahmen einer kathodischen Tauchlackierung mit bspw. Trockentemperaturen von ca.180°C bis 200°C und einer Trockenzeit von ca. 30 Min. dazu geeignet sind, um die nach dem Vertaumeln bestehenden Eigenspannungen abzubauen und so einen leichtgängigen Beschlag herzustellen, ohne dass es weiterer, separater Wärmebehandlungen bedarf.
Wie bereits eingangs dargelegt, kann der Beschlag grundsätzlich an vielfältigen Stellen im Kraftfahrzeugbereich eingesetzt werden. Nach einer besonders vorteilhaften Ausgestaltung ist der Beschlag jedoch zur Neigungsverstellung einer Sitzfläche vorgesehen, wobei hierzu nach einer Weiterbildung vorgesehen ist, dass an dem Beschlagunterteil Befestigungsmittel, insbesondere Gewindebolzen zur Befestigung des Beschlagunterteils an einen Sitzrahmen, insbesondere an einer Innenseite eines Sitzrahmens und an dem Beschlagoberteil eine Lasche zur Anordnung eines Übertragungsrohres angeordnet ist. Diese Ausgestaltung ermöglicht einen einfachen Anbau des Beschlags an einem Sitzrahmen sowie dessen Einsatz als Sitzneigungsverstellung. Das an dem Sitzrahmen, insbesondere an der Innenseite des Sitzrahmens über die Gewindebolzen befestigte Beschlagunterteil ist somit gegenüber diesem festgelegt, wohingegen das Beschlagoberteil gegenüber dem Beschlagunterteil verstellt werden kann, so dass mittels des an der Lasche angeordneten Übertragungsrohres eine Neigungsverstellung des Sitzes vorgenommen werden kann, wobei hierzu das Übertragungsrohr an geeigneter Stelle an dem Kraftfahrzeugsitz befestigt ist.

Nach einer besonders vorteilhaften Ausgestaltung ist ferner vorgesehen, dass das Beschlagunterteil einen Vorsprung aufweist, der sich radial in einer Ausnehmung am Beschlagoberteil erstreckt. Über eine derartige Ausgestaltung des Beschlags lässt sich in einfacher Weise eine Drehwinkelbegrenzung des Beschlagoberteils gegenüber dem Beschlagunterteil erreichen. Auf zusätzliche Winkelbegrenzungen kann gemäß dieser Ausgestaltung der Erfindung verzichtet werden.
Die Erfindung löst die eingangs genannte Aufgabe durch ein Verfahren mit den Merkmalen des Anspruchs 1. Erfindungsgemäß ist vorgesehen, dass zum spielfreien und spannungsarmen Zusammenbau eines Beschlags für eine Versteilvorrichtung eines Kraftfahrzeugsitzes, insbesondere eine Sitzneigungsverstellung folgende Verfahrensschritte durchgeführt werden:
- Zusammenbau des Beschlages aus
   - einem eine erste Innenverzahnung aufweisenden Beschlagoberteil,
   - einem relativ zum Beschlagoberteil um eine Beschlagachse verstellbaren Beschlagunterteil mit einer koaxial zur ersten Innenverzahnung angeordneten zweiten Innenverzahnung,
   - mindestens zwei, vorzugsweise drei drehbar um ihre Längsachse angeordneten Planetenräder, die mit der ersten und zweiten Innenverzahnung in Eingriff befindlich sind und
   - einer sich durch den Beschlag erstreckenden Antriebswelle, die mit einem Ritzel mit den mindestens zwei, vorzugsweise drei Planetenrädern in Eingriff befindlich ist,
- Vertaumeln eines sich durch den Beschlag erstreckenden Endes der Antriebswelle mit einer in einer Öffnung von Beschlagoberteil oder Beschlagunterteil angeordneten Buchse wobei die Antriebswelle (21) auf der der Buchse (6) gegenüberliegenden Seite mit einem Anschlag (12) an dem Beschlag (1) zur Anlage kommt, und
- anschließende Erwärmung des Beschlags auf eine Temperatur von 150°C bis 250°C für eine Dauer von 10 bis 45 Minuten.

Durch das erfindungsgemäße Verfahren kann ein Beschlag bereitgestellt werden, bei dem eine zuverlässige Anordnung des Beschlagoberteils an dem Beschlagunterteil gewährleistet wird, wobei die Verbindung auch unter höheren Belastungen, wie sie im Crashfall oder einem Missbrauch auftreten, stabil ist. Das erfindungsgemäße Verfahren gewährleistet überdies, dass durch die sich an das Vertaumeln anschließende Wärmebehandlung die durch das Vertaumeln entstehenden Verspannungen zwischen dem Beschlagoberteil und dem Beschlagunterteil, welche zu einer nur schwergängigen Betätigung des Beschlags führen können, abgebaut werden. Die verfahrensgemäß vorgesehene Wärmebehandlung kann dabei in einem separaten Arbeitsschritt erfolgen. Sofern jedoch eine Nachbehandlung des Beschlages, bspw. eine kathodische Tauchlackierung mit einem entsprechenden Wärmeeintrag erfolgt, kann auf eine separate Wärmebehandlung des Beschlages verzichtet werden.

Ein Ausführungsbeispiel der Erfindung wird nachstehend mit Bezug auf die Zeichnungen erläutert. In den Zeichnungen zeigen:
- Fig. 1: eine perspektivische Ansicht eines Sitzbeschlags 1 mit in einer Explosionsdarstellung angeordneter Buchse und Antriebswelle;
- Fig. 2: eine perspektivische Darstellung des Sitzbeschlags von Fig. 1 in einer Einbaulage als Sitzneigungsverstellung;
- Fig. 3: eine perspektivische Ansicht der Antriebswelle des Sitzbeschlags von Fig. 1 vor einem Vertaumelungsprozess;
- Fig. 4: eine perspektivische Ansicht der Antriebswelle von Fig. 3 mit vertaumeltem Wellenende;
- Fig. 5: eine perspektivische Ansicht der Buchse des Sitzbeschlags von Fig. 1 und
- Fig. 6: eine Schnittansicht eines Teilbereichs des Sitzbeschlags von Fig. 1 im Bereich der Buchse und des vertaumelten Wellenendes.

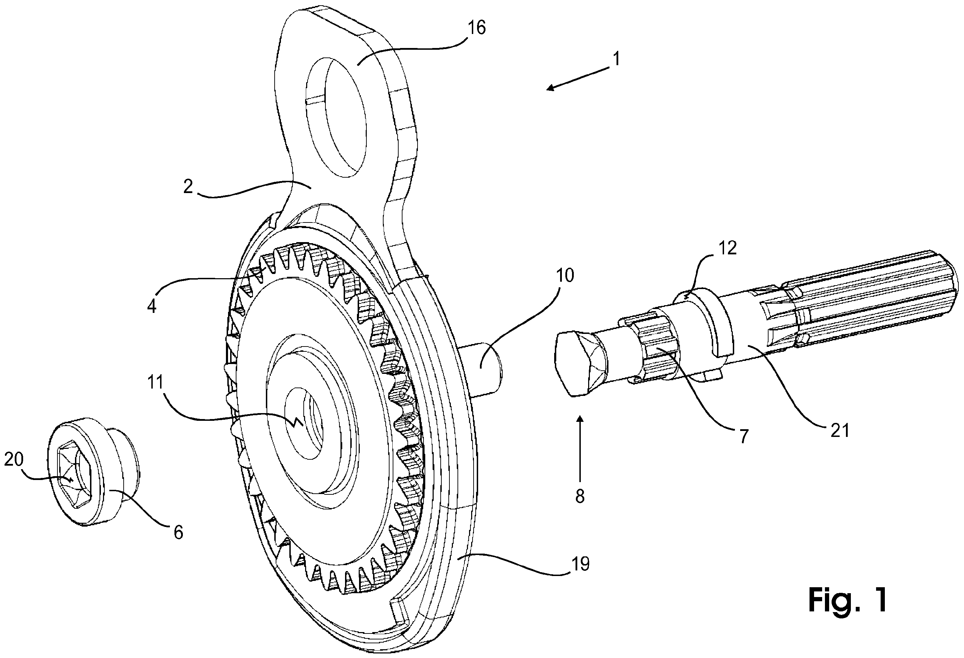

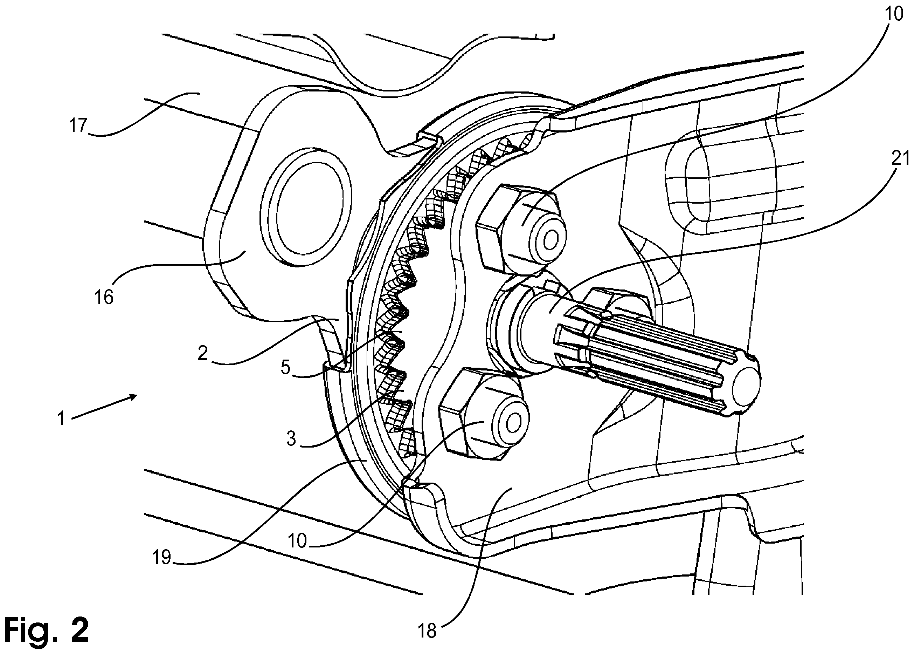

Die in Fig. 1 dargestellte Ausführungsform eines Sitzbeschlags 1 weist ein Beschlagoberteil 2 sowie ein Beschlagunterteil 3 (vgl. Fig. 2) auf. Die Beschlagteile 2, 3 sind über ein hier nicht dargestelltes Planetengetriebe relativ zueinander verdrehbar, wobei zum Antrieb des Planetengetriebes ein Ritzel 7 der Antriebswelle 21 mit einem Sonnenrad des Planetengetriebes in Eingriff befindlich ist. Aufgrund einer unterschiedlichen Zähnezahl einer ersten Innenverzahnung 4 des Beschlagoberteils 2 und einer zweiten Innenverzahnung 5 des Beschlagunterteils 3, wobei die Innenverzahnungen konzentrische Kopf- und Fußkreise aufweisen, bewirkt eine Verdrehung des Sonnenrades über die Planetenräder eine Verstellung des Beschlagoberteils 2 gegenüber dem Beschlagunterteil 3.

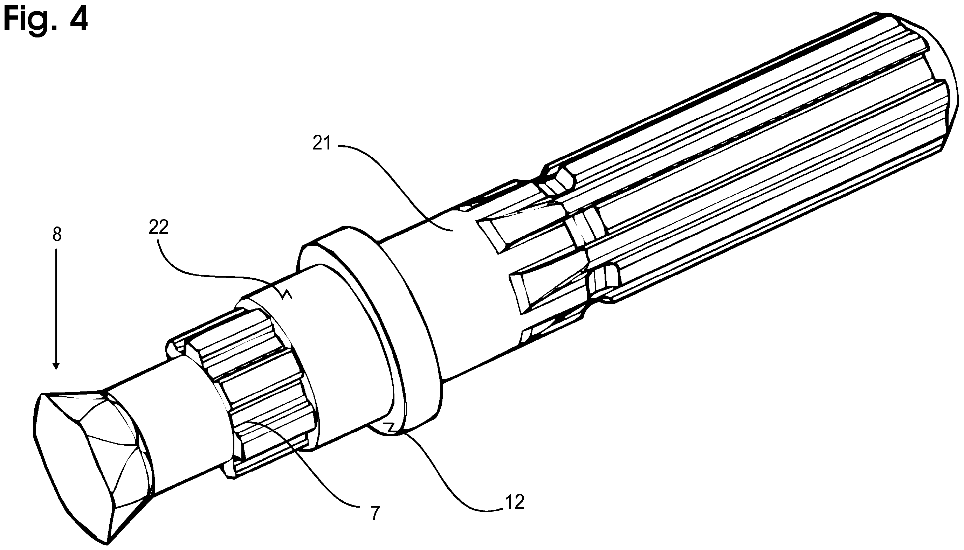

Zur Lagesicherung des Beschlagoberteils 2 an dem Beschlagunterteil 3 dient in erster Linie die Antriebswelle 21. Diese ragt in ihrer Einbaulage an dem Beschlag 1 mit einem Wellenende 8 - das bei der Montage zunächst unverformt ist - durch den Sitzbeschlag 1 und eine Buchse 6, die in einer Öffnung 11 des Beschlagoberteils 2 angeordnet ist. Zur Lagesicherung wird das Wellenende 8 nach der Montage vertaumelt, wobei sich die Form des Wellenendes 8 an die Profilkontur 20 innerhalb der Buchse 6 anpasst, so dass das Wellenende 8 nach dem Taumelungsprozess die in Fig. 1 und 4 dargestellte Form aufweist, in der das Wellenende 8 form- und kraftschlüssig mit der Buchse 6 verdrehfest verbunden ist.

In der Zusammenbaulage erfolgt dabei in axialer Richtung eine Lagesicherung der Beschlagteile 2, 3 aneinander zum einen über die Anschlagfläche 24 an der Buchse 6 sowie über den Anschlag 12 an der Antriebswelle 21, wobei die Anschlagfläche 24 am Beschlagoberteil und der Anschlag 12 am Beschlagunterteil 3 und somit an den gegenüberliegenden Seiten an dem Beschlag 1 anliegen.

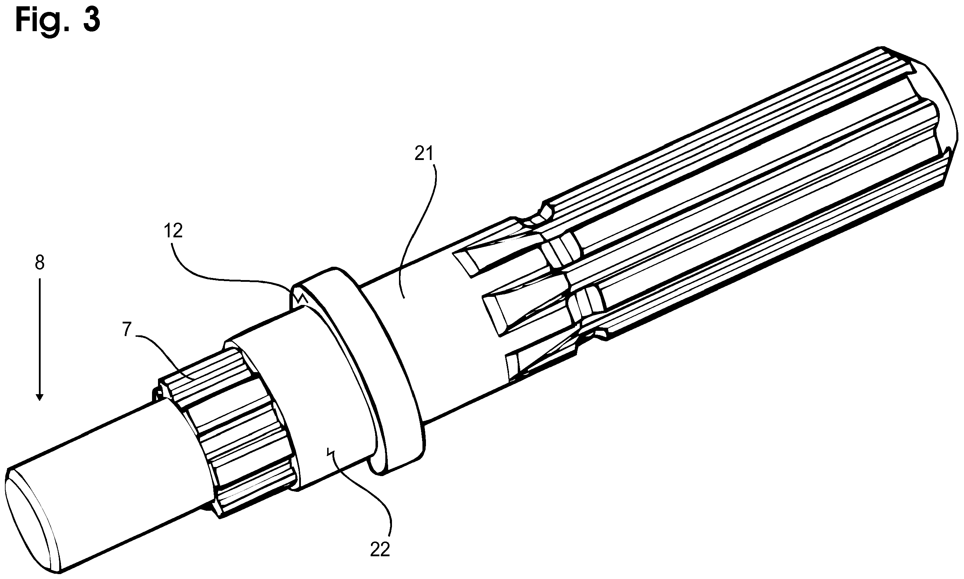

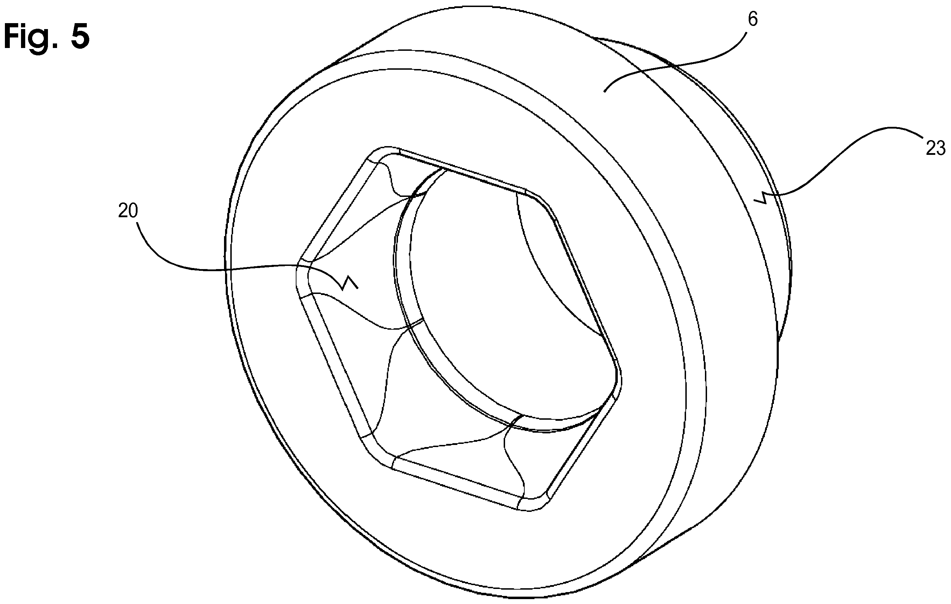

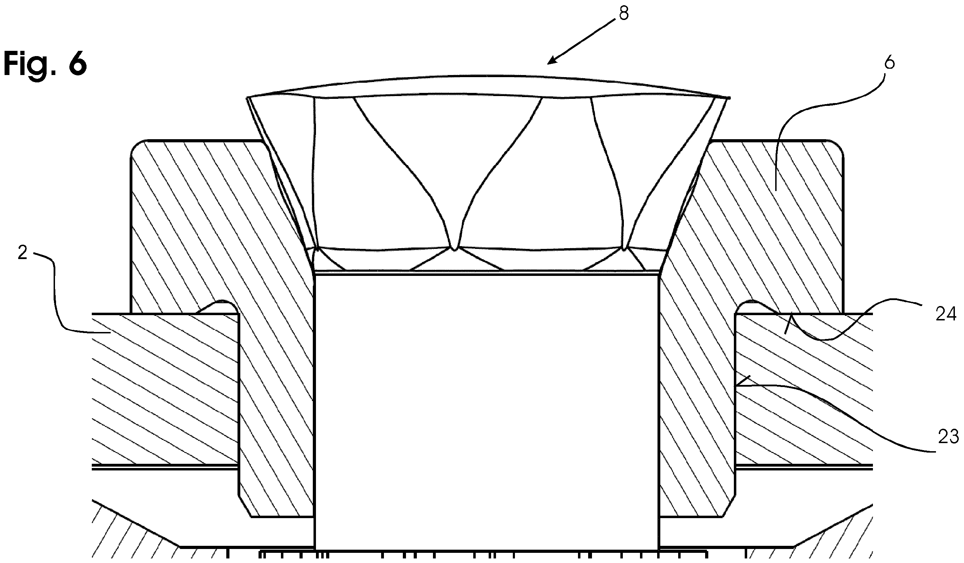

Im Falle eines Antriebs der Antriebswelle 21 erfolgt eine Verdrehung des Anschlags 12 gegenüber dem Beschlagunterteil 3 sowie der Buchse 6 gegenüber dem Beschlagoberteil 2, wobei die Anschlagflächen 24 und 23 der Buchse 6 an dem Beschlagoberteil 2 bzw. innerhalb der Öffnung 11 abgleiten (vgl. Fig. 3-6).

In der in Fig. 2 dargestellten Einbaulage des Sitzbeschlags 1 als Sitzneigungsversteller ist dieser über Gewindebolzen 10 an einer Innenseite eines Sitzrahmens 18 befestigt, wobei die Antriebswelle 21 durch eine Bohrung in dem Sitzrahmen 18 eine außenseitige Zugänglichkeit des Beschlags 1 ermöglicht, wobei bspw. ein hier nicht dargestelltes Handrad auf der Antriebswelle 21 zur Verstellung dieser Antriebswelle 21 verwendet werden kann.

Zur Sitzneigungsverstellung weist der obere Sitzbeschlag 2 eine Lasche 16 auf, an welcher ein Übertragungsrohr 17 angeordnet ist, welches anderenends mit einem weiteren, hier nicht dargestellten Beschlag 1 zusammenwirkt und darüber hinaus an geeigneter Stelle an dem Kraftfahrzeugsitz angeordnet ist, so dass eine Verstellung des Sitzbeschlages 1 eine Verstellung der Sitzneigung bewirkt.

Ergänzend zur Lagesicherung über die Antriebswelle 21 dient ein Haltering 19, welcher außenseitig an dem Beschlag 1 angeordnet, das Beschlagoberteil 2 und Beschlagunterteil 3 übergreift.

## Patentansprüche

1. Verfahren zum spielfreien und spannungsarmen Zusammenbau eines Beschlages für eine Verstellvorrichtung eines Kraftfahrzeugsitzes, insbesondere eine Sitzneigungsverstellung, mit den Schritten
- Zusammenbau des Beschlages (1) aus
- einem eine erste Innenverzahnung (4) aufweisenden Beschlagoberteil (2),
- einem relativ zum Beschlagoberteil (2) um eine Beschlagachse verstellbaren Beschlagunterteil (3) mit einer koaxial zur ersten Innenverzahnung (4) angeordneten zweiten Innenverzahnung (5),
- mindestens zwei, vorzugsweise drei drehbar um ihre Längsachse angeordnete Planetenräder, die mit der ersten und zweiten Innenverzahnung (4, 5) in Eingriff befindlich sind und
- einer sich durch den Beschlag (1) erstreckenden Antriebswelle (21), die mit einem Ritzel (7) mit den mindestens zwei, vorzugsweise drei Planetenrädern in Eingriff befindlich ist,
**gekennzeichnet durch** die Schritte:
- Vertaumeln eines sich durch den Beschlag (1) erstreckenden Endes (8) der Antriebswelle (21) mit einer in einer Öffnung (11) von Beschlagoberteil (2) oder Beschlagunterteil (3) angeordneten Buchse (6), wobei die Antriebswelle (21) auf der der Buchse (6) gegenüberliegenden Seite mit einem Anschlag (12) an dem Beschlag (1) zur Anlage kommt,
- Erwärmung des Beschlages (1) auf eine Temperatur von 150°C bis 250°C für eine Dauer von 10 bis 45 Minuten.

2. Verfahren nach Anspruch 1, **dadurch gekennzeichnet, dass** das Ende (8) der Antriebswelle (21) derart mit der Buchse (6) vertaumelt wird, dass sich die Form des Endes (8) der Antriebswelle (21) an eine Profilkontur (2) innerhalb der Buchse (6) anpasst.

3. Verfahren nach einem der vorhergehenden Ansprüche, **dadurch gekennzeichnet, dass** die Antriebswelle (21) aus einem durch Wärmebehandlung im Temperaturbereich von 150°C bis 250°C spannungsreduzierbarem Material gebildet ist.

4. Verfahren nach einem der vorhergehenden Ansprüche, **dadurch gekennzeichnet, dass** die Antriebswelle (21) aus einem Material mit einer Schmelztemperatur zwischen 200°C und 600°C hergestellt ist.

5. Verfahren nach einem der vorhergehenden Ansprüche, **dadurch gekennzeichnet, dass** die Antriebswelle (21) aus einer Zinkdruckgusslegierung hergestellt ist.

## Claims

1. Method for the play-free and low-stress assembly of a fitting for an adjustment device of a motor vehicle seat, in particular a seat inclination adjustment, with the following steps
- assembling the fitting (1) from
- a fitting upper part (2) having a first internal toothing (4),
- a fitting lower part (3) which is adjustable about a fitting axis relative to the fitting upper part (2) and has a second internal toothing (5) arranged coaxially with respect to the first internal toothing (4),
- at least two, preferably three planetary gears which are arranged rotatably about their longitudinal axis and are in engagement with the first and second internal toothing (4, 5), and
- a drive shaft (21) which extends through the fitting (1) and is in engagement with the at least two, preferably three planetary gears by means of a pinion (7),
**characterized by** the following steps:
- tumbling one end (8) of the drive shaft (21), which end extends through the fitting (1), with a bushing (6) arranged in an opening (11) in the fitting upper part (2) or fitting lower part (3), wherein the drive shaft (21), on the side opposite the bushing (6), comes into contact with a stop (12) on the fitting (1),
- heating the fitting (1) to a temperature of 150°C to 250°C for a duration of 10 to 45 minutes.

2. Method according to Claim 1, **characterized in that** the end (8) of the drive shaft (21) is tumbled with the bushing (6) in such a manner that the shape of the end (8) of the drive shaft (21) is matched to a profile contour (2) within the bushing (6).

3. Method according to either of the preceding claims, **characterized in that** the drive shaft (21) is formed from a material, which can be reduced in stress by thermal treatment within the temperature range of 150°C to 250°C.

4. Method according to one of the preceding claims, **characterized in that** the drive shaft (21) is produced from a material with a melting point of between 200°C and 600°C.

5. Method according to one of the preceding claims, **characterized in that** the drive shaft (21) is produced from a zinc die-casting alloy.

## Revendications

1. Procédé pour l'assemblage sans jeu et avec peu de contraintes d'une ferrure pour un dispositif de réglage d'un siège de véhicule automobile, en particulier pour un réglage de l'inclinaison d'un siège, comprenant les étapes suivantes :
- assemblage de la ferrure (1) à partir
- d'une partie de ferrure supérieure (2) présentant une première denture intérieure (4),
- d'une partie de ferrure inférieure (3) pouvant être réglée par rapport à la partie de ferrure supérieure (2) autour d'un axe de ferrure, avec une deuxième denture intérieure (5) disposée coaxialement par rapport à la première denture intérieure (4),
- d'au moins deux, de préférence trois, roues planétaires disposées de manière à pouvoir tourner autour de leur axe longitudinal, qui sont en prise avec la première et la deuxième denture intérieure (4, 5), et
- d'un arbre d'entraînement (21) s'étendant à travers la ferrure (1), qui est en prise par un pignon (7) avec les au moins deux, de préférence trois, roues planétaires,
**caractérisé par** les étapes suivantes :
- emboîtement d'une extrémité (8) de l'arbre d'entraînement (21) s'étendant à travers la ferrure (1) dans une douille (6) disposée dans une ouverture (11) de la partie de ferrure supérieure (2) ou de la partie de ferrure inférieure (3), l'arbre d'entraînement (21) venant en appui par une butée (12) contre la ferrure (1) du côté opposé à la douille (6),
- chauffage de la ferrure (1) à une température de 150°C à 250°C pendant une durée de 10 à 45 minutes.

2. Procédé selon la revendication 1, **caractérisé en ce que** l'extrémité (8) de l'arbre d'entraînement (21) est emboîtée dans la douille (6) de telle sorte que la forme de l'extrémité (8) de l'arbre d'entraînement (21) s'adapte à un contour profilé (2) à l'intérieur de la douille (6).

3. Procédé selon l'une quelconque des revendications précédentes, **caractérisé en ce que** l'arbre d'entraînement (21) est formé d'un matériau dont les contraintes peuvent être réduites par traitement thermique dans une plage de températures de 150°C à 250°C.

4. Procédé selon l'une quelconque des revendications précédentes, **caractérisé en ce que** l'arbre d'entraînement (21) est fabriqué à partir d'un matériau ayant une température de fusion comprise entre 200°C et 600°C.

5. Procédé selon l'une quelconque des revendications précédentes, **caractérisé en ce que** l'arbre d'entraînement (21) est fabriqué à partir d'un alliage de zinc moulé sous pression.
